# EUROPEAN PATENT SPECIFICATION

(11) **EP 2 947 994 B1**
(45) Date of publication and mention of the grant of the patent: **31.10.2018**
(21) Application number: 13872831.6
(22) Date of filing: 28.05.2013
(51) Int. Cl.: A21D 2/18, A21D 2/26, A21D 2/36, A21D 10/04

(54) **SHELF-STABLE, BROWNIE PRODUCT**
LAGERSTABILES BROWNIE-PRODUKT
PRODUIT DE TYPE BROWNIE LONGUE CONSERVATION

(30) Priority: 25.01.2013 US 201361756662 P
(43) Date of publication of application: 02.12.2015
(73) Proprietor: General Mills, Inc., Minneapolis, Minnesota 55440 (US)
(72) Inventor: ENZ, Jeffrey F., Minneapolis, Minnesota 55419 (US); DRONEN, Dana, New Brighton, Minnesota 55112 (US); KLOSTERMANN, Andrea, Wyoming, Minnesota 55092 (US)
(74) Representative: Vossius & Partner Patentanwälte Rechtsanwälte mbB
(86) International application number: PCT/US2013/042796
(87) International publication number: WO 2014/116296

(56) References cited:
- EP-A2- 0 145 550
- WO-A1-99/30577
- US-A- 4 774 099
- US-A- 4 781 938
- US-A1- 2002 001 657
- US-A1- 2004 219 272
- ORR.: 'High-Fructose Com Syrup's Health Risks Remain Sticky.' PACIFIC STANDARD MAGAZINE., [Online] 25 January 2011, Retrieved from the Internet: <URL:http://www.psmag.com/health/high-fruct ose-corn-syrups-health-risks-remain-sticky- 27633/> [retrieved on 2013-10-23]

## Description

### FIELD OF THE INVENTION

This application is directed to extend shelf life bakery food products, and methods of making the food products.

### BACKGROUND

Most ready-to-eat bakery products available in the market have an ambient shelf life of 3 to 4 weeks. At or near the end of this shelf life, these food products are prone to failure due to microbiological issues (e.g., mold growth), fat/flavor degradation, and/or textural failure. Further, many of the products have a dry and excessively crumbly texture as they age, which is undesirable to the consumer.

A need exists for a convenient, bakery product having satisfactory sensory characteristics and a further extended shelf life.
US 4,781,938 relates to ready-to-eat, crumb-structured snack food products.

### SUMMARY

The present invention addresses the aforementioned need by providing a shelf stable food product such as a pie, bar, cookie, or pastry. The present invention is defined as in the appended claims. In particular, this disclosure provides a shelf,stable, baked, brownie. The
brownie is formed from a batter comprising 11-14 wt% flour, 40-50% sweetener, 14.5-16.5% whole egg, shortening, and optionally cocoa. The sweetener includes sucrose, corn syrup and fructose, present in a ratio of 2.5-3.5/0.5-1.5/0.05-0.15. The baked brownie has a moisture level of about 16%.

In some embodiments, the corn syrup has a DE of 42, the sucrose is powdered sugar, and the fructose is crystalline fructose.

Additionally in some embodiments, the sucrose, corn syrup and fructose are present in a ratio of about 3/1/0.1.

In another aspect, this disclosure provides a brownie batter having 11-14 wt% flour, 40-50% sweetener, and 14.5-16.5% whole egg. The sweetener includes powdered sucrose, corn syrup and crystalline fructose, present in a ratio of 2.5-3.5/0.5-1.5/0.05-0.15. The batter may further include cocoa.

The above summary of the various embodiments of the disclosure is not intended to describe each illustrated embodiment or every implementation of the disclosure. These and various other features and advantages will be apparent from a reading of the following detailed description.

### BRIEF DESCRIPTION OF THE DRAWINGS

The invention may be more completely understood in consideration of the following detailed description of various embodiments of the invention in connection with the accompanying drawings, in which:
FIG. 1 is a perspective view of a brownie product.
FIG. 2 is a schematic side view of an embodiment of a packaged brownie product.
FIG. 3 is a process schematic depicting a method for making a brownie product.

While the disclosure is amenable to various modifications and alternative forms, specifics thereof have been shown by way of example in the drawings and will be described in detail. It should be understood, however, that the intention is not to limit the disclosure to the particular embodiments described.

### DETAILED DESCRIPTION

The present disclosure provides brownies and brownie products (usually single serving products) that are shelf stable for at least 1 month at room temperature after packaging, in some embodiments at least 3 months, and in other embodiments at least 6 months, and in other embodiments up to 9 months. The products are formed from a batter that has narrow ranges of egg protein, of moisture, and of oil/fat, and that utilizes precise ranges of certain sweeteners. The present disclosure also provides a method of making brownies and brownie products that are shelf stable for at least 1 month at room temperature after packaging, in some embodiments at least 3 months or at least 6 months, and up to 9 months in some embodiments.

In order to achieve extended shelf life of the brownie products of this disclosure, the moisture content of the product is carefully managed by product design.
Additionally, sugar and fat recrystallization, which is typically undesirable in the product, is inhibited by product design.

In the following description, reference is made to the accompanying drawings that form a part hereof and in which are shown by way of illustration at least one specific embodiment. The following description provides additional specific embodiments.

The following detailed description is not to be taken in a limiting sense. While the present disclosure is not so limited, an appreciation of various aspects of the disclosure will be gained through a discussion of the examples provided below.

Unless otherwise indicated, all numbers expressing feature sizes, amounts, and physical properties are to be understood as being modified by the term "about." Accordingly, unless indicated to the contrary, the numerical parameters set forth are approximations that can vary depending upon the desired properties sought to be obtained by those skilled in the art utilizing the teachings disclosed herein.

As used herein, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

For purposes of this disclosure, water activity, or a_{w}, is measured as per AOAC 978.18, moisture content is as per AOAC 925.45, and pH is as per AOAC 943.02, where "AOAC" is the "Association of Analytical Communities."

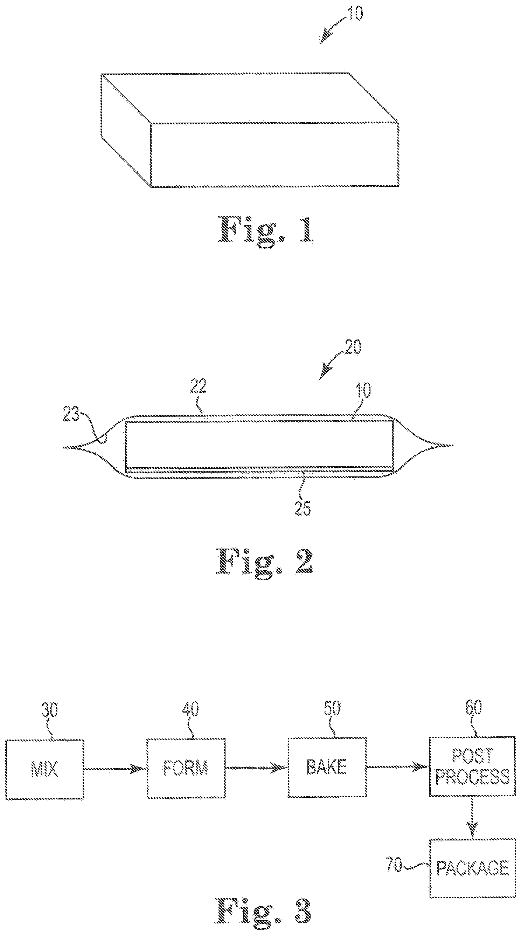

Referring now to the figures, a brownie or brownie product according to the present disclosure is illustrated in FIG. 1 as brownie 10. Brownie 10 is a chocolate (cocoa or carob), sugar and flour-based product, having a texture that is a cross between a cake and fudge. Brownie 10 may be either "fudgy" or "cakey", the fudgy version being moister and having a higher density, usually about 1 gram/cc. Brownie 10 may include various additive ingredients or filling ingredients such as but not limited to nuts, chocolate chips or other chips, marshmallow, frosting, and/or caramel, depending on the desired final product.

"Brownies" as used herein includes both chocolate-flavored brownies and vanilla-flavored brownies, called "blondies". Blondies are typically made with brown sugar (sucrose), vanilla and no chocolate.

Brownie 10 is a generally flat, rectangular or square bar, although brownie 10 could have other shapes. Brownie 10, in its ready-to-eat state, may have a size of, for example, from about 1 inch to 4 inches in any dimension, and weigh about 5 to 150 grams.

Brownie 10 is formed from a batter that includes flour or flour-substitute, fat (e.g., oil or shortening), sweetener, egg protein, optional moisture-retaining ingredients, and, for a chocolate brownie, chocolate or cocoa. In some recipes, a leavening agent or leavening system is added. Other ingredients such as flavorant(s), flavoring(s), emulsifier(s), acidulant(s), or antimicrobial(s) may be added.

A variety of different flours can be used for the batter for brownie 10, and the different flours can be selected to give a variety of textures, tastes, and appearances to the final product 10. Useful flours include, but are not limited to, hard wheat flour, soft wheat flour, corn flour, high amylose flour, rice flour, and low amylose flour. The relative proportions of the types of flours used can be varied as desired.

Natural shortenings, animal or vegetable, or synthetic shortenings can be used in the batter for brownie 10. In some embodiments, shortening, fat, oil, etc. may be referred to as lipid(s). Generally, shortening is comprised of triglycerides, fats and fatty oils made predominantly of triesters of glycerol with fatty acids. Fats and fatty oils useful in producing shortening include cotton seed oil, ground nut oil, soybean oil, sunflower oil, grapeseed oil, sesame oil, olive oil, corn oil, canola oil, vegetable oil, safflower oil, palm oil, palm kernel oil, coconut oil, or combinations thereof.

The shortening may be composed of monounsaturated fatty acids, polyunsaturated fatty acids, and/or trans fatty acids. In some embodiments, the total saturated fatty acids in the shortening is 35-53%, with the total monounsaturated fatty acids being 15-48%, the total polyunsaturated acids being 8-35%, and the total trans fatty acids being 0.5-2%. In other embodiments, the total saturated fatty acids in the shortening is about 35%, with the total monounsaturated fatty acids being about 48%, the total polyunsaturated acids being about 16%, and the total trans fatty acids being about 1%. In yet other embodiments, a suitable fat may have the following profile: total saturated fatty acids being 7-11%, the total monounsaturated fatty acids being 2-6%, the total polyunsaturated acids being 1-4%, and the total trans fatty acids being less than 0.1%, (e.g., 0.05-0.1%). In other embodiments, the total saturated fatty acids is 7-9%, the total monounsaturated fatty acids is 5-6%, the total polyunsaturated acids is 2-3%, and the total trans fatty acids is 0.07-0.1%.

Fat selection should include both mobile and crystalline fat at room temperature, the consistency of which should be pliable.

In some embodiments, the shortening is a solid or a semi-solid shortening, having a solid fat index (SFI) of 31-35 at 10 °C (50 °F), 23.5-26.5 at 21.1 °C (70 °F), 22-25 at 26.7 °C (80 °F), 17-20 at 33.3 °C (92 °F) and 11.5-13.5 at 40 °C (104 °F).

Examples of suitable sweeteners include sucrose (cane or beet sugar), both liquid and crystalline fructose (e.g., regular and high fructose corn syrup), dextrose, maltose, and reduced or zero calorie sweeteners such as saccharide, sucralose and stevia extracts. In some embodiments, powdered sugar (sucrose) is used.

It has been found that a particular blend of sweeteners, i.e., a
combination of powdered sugar, corn syrup, and fructose (e.g., crystalline fructose) provides acceptable shelf-life for brownie 10. The ratio of powdered sugar to corn syrup to crystalline fructose is 2.5-3.5 to 0.5-1.5 to 0.05-0.15, for example, 3 to 1 to 0.1 (or, 3/1/0.1). In other embodiments, the percentages powdered sugar to corn syrup to crystalline fructose is 70-80% to 20-30% to 0.5-5%, for example, 72-74% to 34-35% to 1-3%, for example, about 73% to about 24% to about 2%.
Also described herein is that blends of other sweeteners could be used, the blended sweeteners being at the same, similar or different relative levels as the powdered sugar, corn syrup, and fructose. Such blends should have similar sweetness characteristics (e.g., sweetness level, bitterness level, crystallization characteristics, etc.) as the blend of powdered sugar, corn syrup, and fructose.

Brownie 10 also includes an amount of egg protein, which may be obtained by adding whole eggs or egg whites (for example, as albumin). Egg protein provides long term cohesion to brownie 10, yet too much can result in an off-flavor of the product and too little can result in an undesirably dry product. In some embodiments, liquid eggs or egg protein is preferred over dried or powdered eggs.

The leavening agent may be a chemical leavening agent or a yeast-based leavening agent; for brownies, a chemical leavening agent is typically used. Examples of suitable leavening agents include basic leavening agent sodium bicarbonate and acidic leavening agents monocalcium phosphate (MCP), dicalcium phosphate (DCP), monocalcium phosphate anhydrous (AMCP), sodium acid pyrophosphate (SAPP), sodium aluminum phosphate (SALP), dimagnesium phosphate (DMP), and sodium aluminum sulphate (SAS). Leavening agents aid to develop the structure and texture of the baked product.

Examples of moisture-retaining ingredients include humectant(s), hydrocolloid(s), gel(s) and gum(s).

Examples of suitable humectants include glycerin and sorbitol. Suitable hydrocolloids include hydrophilic polymers that can be of vegetable, animal, microbial, or synthetic origin. Hydrocolloids generally contain many hydroxyl groups and can be polyelectrolytes. Some functional properties of hydrocolloids can include water binding, thickening and gelling (thus impacting yield value), emulsion stabilization, prevention of ice recrystallization, and organoleptic properties. Many materials can be described as gums and hydrocolloids. One useful hydrocolloid is gelatin. Suitable gums could also be described as hydrocolloids (such as agar, alginate, carrageenans, carboxymethylcellulose, cellulose, gellan gum, guar gum, gum arabic, locust bean gum, and xanthan gum). Other illustrative polysaccharides that are hydrocolloids include arabinoxylan, curdlan, gellan, β-glucan, pectin, and starch. A combination of multiple hydrocolloids or gums may be used. In some embodiments, a combination of locust bean gum and xanthan gum is preferred, for it has been found that this combination has a surprisingly high water retention capability.

For a chocolate brownie 10, the batter includes a source of cocoa. A suitable cocoa is either natural or "Dutched" chocolate from which a substantial portion of the fat or cocoa butter has been removed. Alternately, chocolate and cocoa fractions can be used and it is intended, therefore, that chocolate is to be encompassed by the term "cocoa". When chocolate is used, it can be as chocolate chips, chocolate chunks, powdered chocolate, or chocolate syrup. It may be necessary to reduce the amount of shortening in the mix when chocolate is used because of the additional fat present as cocoa butter. It may also be necessary to add larger amounts of chocolate as compared to cocoa in order to provide an equivalent amount of flavoring and coloring. The chocolate may be "dark" or may be milk chocolate.

As indicated above, brownie 10 may include additionally ingredients such as flavorant(s) or flavoring(s), emulsifier(s), acidulant(s), or antimicrobial(s).

Examples of suitable flavorants or flavorings include spices and specific flavorings such as fruit, vanilla, butter, mint, and the like. The flavorant used for the batter for brownie 10 can be a liquid or solid.

Emulsifiers include nonionic, anionic, and/or cationic surfactants that can be used to influence the texture and homogeneity of a mixture, increase stability, improve eating quality, and prolong palatability. Emulsifiers include compounds such lecithin, mono- and diglycerides of fatty acids, propylene glycol mono- and diesters of fatty acids, glyceryl-lacto esters of fatty acids, ethoxylated mono- and diglycerides and the like.

Examples of suitable acidulants are glucono delta-lactone, citric acid, ascorbic acid, and malic acid.

Examples of suitable antimicrobials or other preservatives or mold inhibitors include sodium salts of propionic or sorbic acids, potassium sorbate, sodium diacetate, vinegar, monocalcium phosphate, lactic acid, sodium benzoate, and mixtures thereof.

Additional components may be present in the batter of brownie 10 to facilitate processing, or to improve the taste, texture, or hydration behavior product 10. Examples of such ingredients include salt (NaCl), nonfat dry milk, whey protein, and leavening agents.

The batter forming brownie 10, prior to baking, has a water activity (a_{w}) from 0.6-0.85, in some embodiments 0.6-0.7. Additionally or alternately, the batter, prior to baking, has a moisture content of up to 20%, and in some embodiments up to about 22%.

Table 1 provides an exemplary list of ingredients as well as exemplary formulation ranges for the batter for brownie 10.

**Table 1**

| Ingredient | Possible Range(s) (wt%) in Product |
|---|---|
| Flour(s) | 9-20* |
| | 11-14 |
| | 12-13 |
| Cocoa | 1-6 |
| | 2-3 |
| Total Sweetener(s) | 25-60* |
| | 40-50 |
| Sucrose | 20-40 |
| | 29-34 |
| Fructose | 1-5 |
| | 2-4 |
| Corn Syrup | 5-15 |
| | 9-11 |
| Flour:sweetener ratio | 1:2-1:5 |
| | 1:3-1:4 |
| | 1:34 |
| Shortening | 10-30 |
| | 16-17 |
| | 16.5 |
| Liquid Shortening | 1-17 |
| | 2-4 |
| Solid Shortening | 2-20 |
| | 13-15 |
| Egg | 10-20* |
| | 14.5-16.5 |
| Egg Protein | 13-18* |
| | 14-16 |
| | 15 |
| Water | 0-2 |
| | 0.5-1.5 |
| Humectant | 0-8 |
| | 1-4 |
| Gum(s) | 0-1 |
| | 0.1-0.2 |
| Flavoring(s) | 0-2 |
| | 1-1.5 |
| Salt | 0-2 |
| | 0.05-1 |
| | 0.1-0.3 |
| Antimicrobial(s) | 0-1.5 |
| | 0.1-0.2 |
| Leavening agent(s) | 0-1 |
| | 0.1-0.3 |

| | |
|---|---|
| * Ref. formulation ranges | |

FIG. 2 illustrates an embodiment of packaged brownie product as retail product 20. Product 20 has a packaging or overwrap 22 with an internal volume 23 for receiving a product. In this embodiment, brownie 10 according to the present disclosure and as described above is enveloped in packaging 22. Packaging or overwrap 22 may be any conventional packaging and include materials such as paper, polymeric material (including metallized polymeric material), metal foil, paperboard, cardboard, and the like, and may be air-tight or include a moisture barrier. The packaging may be flexible (as is polymeric film) and/or rigid (as is a paperboard container). In some embodiments, the packaging is a metallized flexible laminate package. In this embodiment, packaging 22 includes a paperboard layer 25 on which brownie 10 is seated.

In the packaged retail state, brownie 10, and other products according to this disclosure, have a moisture content of about
16%, a water activity (a_{w}) from 0.6-0.7 (e.g., about 0.65-0.7), and a baked pH of 5.5-6.8 in a 10% dilution.

The brownie has been described above when in a ready-to-be-sold or ready-to-be-consumed state. The overall moisture within the brownie, when packaged or otherwise stored in a sealed film package, does not significantly change over time (i.e., from the time of production to at least 1 month later, in some embodiments at least 3 months later), and also the distribution of moisture within the product also does not significantly change.

The brownie, in its ready-to-consume state, has a moist and chewy texture with no grittiness or crystallization, all which are highly desirable organoleptic properties with a desirable flavor profile (i.e., it has minimal off flavor development over its shelf lift). These desirable properties remain at least 1 month, usually at least 3 months, sometimes at least 6 months after packaging, and sometimes up to 9 months after packaging, without staling of the flavor(s) of the brownie. Additionally, the product avoids mold growth thereon and therein for at least one month, usually at least 3 months, sometimes at least 6 months, and sometimes up to 9 months.

### Moisture Management

As described above, the shelf life of the brownies of this disclosure is based on the management of moisture level and inhibition of sugar crystallization within the product. The brownies of this disclosure are designed to have little, if any, moisture migration that would degrade the sweetener by recrystallizing the sugar back to its prebaked state. In prior art products, the high level of moisture in the product results in short shelf-life, often due to mold growing on the surface, due to off-flavors and rancidity reactions caused by the high level of moisture combined with sugar and fat, or due to the texture changes from crystallization of sugar, fat or starch. The food products of this disclosure have a low moisture level and water activity.

Brownie 10, and other brownie products of this disclosure, has a finished product water activity (a_{w}) of about 0.5-0.7, in some embodiments about 0.55-0.65, when the product is in a ready-to-eat form. For embodiments having a filling component, the water activity of the filling should be no more than 0.1 a_{w} different than the water activity of the crumb. Additionally, the finished product has a moisture level of about 16%. The water activity and moisture level remain fairly constant throughout the shelf life of the packaged product. When measured 1 month after having been packaged, these values have changed less than 10%, in some embodiments less than 5%, from the values of the product 48 hours after being baked.

### Exemplary Methods of Making the Brownie and Brownie Products

As described above in respect to FIGS. 1 and 2, brownie 10 (and other products according to this disclosure), can be made by the following process.

First, the ingredients are thoroughly mixed together at step 30. In some embodiments, the dry or solid ingredients (e.g., flour, sugar, fructose, etc.) are mixed together, and the liquid ingredients (e.g., eggs, water) are mixed together, afterwhich the two are combined to form a batter. In other embodiments, any solid shortening maybe added to the mixed solid ingredients, and the mixture is then creamed prior to adding the liquid ingredients.

In step 40, the batter is formed into its desired shape, for example, by pouring into a pan or by extruding onto a conveyor, which can be done if the batter is sufficiently viscous. As an example process, the batter may be co-extruded with caramel to provide a final brownie product having a caramel filling.

The batter is baked at step 50 (e.g., 350°F for 12-16 minutes) to form a baked product.

The baked product may be cooled prior to step 60, or may be immediate processes into final form. The final product may be formed by cutting with an ultrasonic slitter or a guillotine.

The resulting finishing product can then be packaged in step 70 to provide a saleable brownie. Typically, packaging is done within 30 to 60 minutes of post processing step 60.

Of course, the brownie of this disclosure may be made by alternate methods.

### Exemplary Brownies

In one particular example, an Example and three comparative examples (Comparatives A, B, C), were formed from the ingredients listed in Table 2 using the process of FIG. 3, described above.

Table 3 provides the amount of flour and sweetener in the batter, and provides the relationship of solids and liquids.

**Table 2: Brownie Batter Ingredients**

| | Example | Comp. A | Comp. B | Comp. C |
|---|---|---|---|---|
| Ingredient | Wt% | Wt% | Wt% | Wt% |
| Sucrose (powdered sugar) | 30 | 33 | 33.746 | 33.101 |
| Corn syrup (42 DE) | 10.128 | -- | 10.226 | 10.128 |
| Corn syrup (63 DE) | -- | 10 | -- | -- |
| Fructose (crystalline) | 3.102 | -- | -- | -- |
| Whole eggs (liquid, pasteurized) | 15.06 | 18 | 15.032 | 15.06 |
| Shortening (palm - canola oil) | 13.983 | -- | 14.061 | 13.983 |
| Shortening (partially hydrogenated soybean oil) | -- | 13.75 | -- | -- |
| Flour (soft red winter blend) | 12.705 | -- | -- | 12.705 |
| Flour (mennel-dry, O ½) | -- | 12.5 | 12.782 | -- |
| Cocoa (dark Dutched) | 6.617 | 6.5 | 6.647 | 6.617 |
| Glycerin | 3.084 | 2 | 3.068 | 3.084 |
| Canola oil (high oleic) | 2.427 | 2.5 | 2.556 | 2.427 |
| Water | 1 | -- | -- | 1 |
| Vanilla powder | 0.771 | 0.6 | 0.767 | 0.771 |
| Salt | 0.617 | 0.75 | 0.614 | 0.617 |
| Gellan gum | 0.185 | 0.09 | 0.184 | 0.185 |
| Dicalcium phosphate | 0.185 | 0.18 | 0.184 | 0.185 |
| Potassium sorbate | 0.134 | 0.13 | 0.133 | 0.134 |

**Table 3: Brownie Batter Ingredients Grouped**

| | Example | Comp. A | Comp. B | Comp. C |
|---|---|---|---|---|
| Ingredient | Wt% | Wt% | Wt% | Wt% |
| Flour | 12.705 | 12.5 | 12.782 | 12.705 |
| Sweetener | 43.230 | 43 | 43.972 | 43.229 |
| Solids | 68.299 | 67.5 | 69.118 | 68.298 |
| Liquids | 21.571 | 22.5 | 20.656 | 21.571 |

The ingredient group "Sweetener" included solid and liquid sweeteners, including sucrose, corn syrup, and fructose.

The ingredient group "Solids" included flour, sugar, cocoa, vanilla, salt, gum, dicalcium phosphate, and potassium sorbate.

The ingredient group "Liquids" included the eggs, glycerin, oil, and water.

### Shelf-Life Testing

Food product samples, prepared as above, were stored for 16 weeks under the following conditions to simulate warehouse distribution and to test accelerated shelf life.
(1) 90 °F with 15% RH - to simulate hot dry stress
(2) weather room conditions (cycling through a temperature of 90 °F for 12 hours followed by 70 °F for 12 hours, 65% RH) - to simulate hot humid stress
(3) ambient storage (70 °F with 38% RH) - to simulate room temperature storage

The food product samples were pulled from the 'hot dry' and 'hot humid' storage conditions every two weeks to evaluate organoleptic properties including: texture, flavor, and overall acceptability. The ambient samples were pulled at 12, 16, 24 and 36 weeks to evaluate organoleptic properties including: texture, flavor, and overall acceptability. All evaluations were performed after allowing the samples to allowing the samples to equilibrate at room temperature for at least 24 hours.

A five point evaluation scale was used to grade samples. Score of 4 or above was deemed as shelf life failure.
1 = Like fresh product.
2 = Like fresh until compared to 0°F sensory reference. There maybe a flavor loss or slight change in texture.
3 = Product is not "like fresh" but has no clearly objectionable characteristics. The difference should be apparent even without going back to the sensory reference.
4 = There are some off notes detected or the texture is marginal.
5 = Product is objectionable and should clearly not be available to the consumer.

Kinetic modeling, based on flavor loss and texture degradation, was used to predict an equivalent shelf life of the products under each of the storage conditions.

The Comparative A product failed after 6 months due to sugar recrystallization, which detrimentally affected the texture, and oxidation that produced an undesirable musty flavor with high egg notes,

The Comparative B product failed after 7 months due to sugar recrystallization, which detrimentally affected the texture, dryness of the product, and oxidation that produced an undesirable off-flavor

The Comparative C product failed after 9 months due to sugar recrystallization, which detrimentally affected the texture, and oxidation that produced an undesirable off-flavor

The Example, after 12 months, maintained cohesive properties, and no objectionable flavor or texture degradation was observed during the storage period. The formulation of the Example retarded sugar recrystallization and stabilized water activity of the product.

## Claims

1. A shelf stable, baked, brownie formed from a batter comprising:
11-14 wt% flour;
40-50% sweetener comprising sucrose, corn syrup and fructose, present in a ratio of 2.5-3.5/0.5-1.5/0.05-0.15;
14.5-16.5% whole egg; and
shortening,
the baked brownie having a moisture level of about 16%.

2. The brownie of claim 1, wherein the fructose is crystalline fructose.

3. The brownie of claim 1 or 2, wherein the sucrose, corn syrup and fructose are present in a ratio of 3/1/0.1.

4. The brownie of any of claims 1-3, wherein the sucrose, corn syrup and fructose are present as 70-80%, 20-30% and 0.5-5%, respectively, of the sweetener.

5. The brownie of any of claims 1-4, wherein the batter further comprises cocoa.

6. The brownie of any of claims 1-5, wherein the shortening comprises mobile and crystalline fat at room temperature, and the consistency of which is pliable at room temperature.

7. The brownie of any of claims 1-6, wherein the batter further comprises a moisture-retaining ingredient comprising humectant(s), hydrocolloid(s), gel(s) and/or gum(s).

8. The brownie of any of claims 1-7, wherein the baked brownie has a density of about 1 gram/cc.

9. The brownie of any of claims 1-8 having a shelf life of at least 3 months.

10. The brownie of any of claims 1-8 having a shelf life of at least 6 months.

11. A brownie batter comprising:
11-14 wt% flour;
40-50% sweetener comprising powdered sucrose, corn syrup and crystalline fructose, present in a ratio of 2.5-3.5/0.5-1.5/0.05-0.15; and
14.5-16.5% whole egg.

12. The batter of claim 11 further comprising cocoa.

13. The batter of claim 11 or 12, wherein the powdered sucrose, corn syrup and crystalline fructose are present in a ratio of 3/1/0.1.

14. The batter of any of claims 11-13 further comprising a moisture-retaining ingredient comprising humectant(s), hydrocolloid(s), gel(s) and/or gum(s).

## Patentansprüche

1. Ein haltbarer, gebackener Brownie, gebildet aus einem Teig, umfassend:
11-14 Gew.-% Mehl;
40-50% Süßstoff, umfassend Saccharose, Maissirup und Fruktose, die in einem Verhältnis von 2,5-3,5/0,5-1,5/0,05-0,15 vorliegen;
14,5-16,5% Vollei; und
Backfett,
wobei der gebackene Brownie einen Feuchtigkeitsgehalt von etwa 16% aufweist.

2. Der Brownie nach Anspruch 1, wobei es sich bei der Fruktose um kristalline Fruktose handelt.

3. Der Brownie nach Anspruch 1 oder 2, wobei die Saccharose, der Maissirup und die Fruktose in einem Verhältnis von 3/1/0,1 vorliegen.

4. Der Brownie nach einem der Ansprüche 1-3, wobei die Saccharose, der Maissirup und die Fruktose als 70-80%, 20-30% bzw. 0,5-5% des Süßstoffes vorliegen.

5. Der Brownie nach einem der Ansprüche 1-4, wobei der Teig ferner Kakao umfasst.

6. Der Brownie nach einem der Ansprüche 1-5, wobei das Backfett mobiles und kristallines Fett bei Zimmertemperatur umfasst und dessen Konsistenz bei Zimmertemperatur geschmeidig ist.

7. Der Brownie nach einem der Ansprüche 1-6, wobei der Teig ferner eine feuchtigkeitsbindende Zutat enthält, die Feuchthaltemittel, Hydrokolloid(e), Gel(e) und/oder Gummi(s) umfasst.

8. Der Brownie nach einem der Ansprüche 1-7, wobei der gebackene Brownie eine Dichte von etwa 1 Gramm/cm³ aufweist.

9. Der Brownie nach einem der Ansprüche 1-8 mit einer Haltbarkeit von mindestens 3 Monaten.

10. Der Brownie nach einem der Ansprüche 1-8 mit einer Haltbarkeit von mindestens 6 Monaten.

11. Ein Brownieteig, umfassend:
11-14 Gew.-% Mehl;
40-50% Süßstoff, umfassend Saccharosepulver, Maissirup und kristalline Fruktose, die in einem Verhältnis von 2,5-3,5/0,5-1,5/0,05-0,15 vorliegen; und 14,5-16,5% Vollei.

12. Der Teig nach Anspruch 11 ferner umfassend Kakao.

13. Der Teig nach Anspruch 11 oder 12, wobei das Saccharosepulver, der Maissirup und die kristalline Fruktose in einem Verhältnis von 3/1/0,1 vorliegen.

14. Der Teig nach einem der Ansprüche 11-13 ferner umfassend eine feuchtigkeitsbindende Zutat, die Feuchthaltemittel, Hydrokolloid(e), Gel(e) und/oder Gummi(s) umfasst.

## Revendications

1. Brownie cuit longue conservation dans des conditions ambiantes, formé à partir d'une pâte comprenant :
11 à 14 % en poids de farine ;
40 à 50 % d'un édulcorant comprenant du saccharose, du sirop de maïs et du fructose, présents en un rapport de 2,5-3,5/0,5-1,5/0,05-0,15 ;
14,5 à 16,5 % d'oeuf entier ; et
de la graisse alimentaire,
le brownie cuit ayant un taux d'humidité d'environ 16 %.

2. Brownie selon la revendication 1, dans lequel le fructose est du fructose cristallin.

3. Brownie selon la revendication 1 ou 2, dans lequel le saccharose, le sirop de maïs et le fructose sont présents en un rapport de 3/1/0,1.

4. Brownie selon l'une quelconque des revendications 1 à 3, dans lequel le saccharose, le sirop de maïs et le fructose sont présents à raison de 70 à 80 %, 20 à 30 % et 0,5 à 5 %, respectivement, de l'édulcorant.

5. Brownie selon l'une quelconque des revendications 1 à 4, dans lequel la pâte comprend en outre du cacao.

6. Brownie selon l'une quelconque des revendications 1 à 5, dans lequel la graisse alimentaire comprend de la graisse mobile et cristalline à la température ambiante, et a une consistance qui est flexible à la température ambiante.

7. Brownie selon l'une quelconque des revendications 1 à 6, dans lequel la pâte comprend en outre un ingrédient retenant l'humidité comprenant un ou plusieurs humectant(s), hydrocolloïde(s), gel(s) et/ou gomme(s).

8. Brownie selon l'une quelconque des revendications 1 à 7, dans lequel le brownie cuit a une masse volumique d'environ 1 gramme/cm³

9. Brownie selon l'une quelconque des revendications 1 à 8, ayant une durée de conservation d'au moins 3 mois.

10. Brownie selon l'une quelconque des revendications 1 à 8, ayant une durée de conservation d'au moins 6 mois.

11. Pâte à brownie comprenant :
11 à 14 % en poids de farine ;
40 à 50 % d'un édulcorant comprenant du saccharose en poudre, du sirop de maïs et du fructose cristallin, présents en un rapport de 2,5-3,5/0,5-1,5/0,05-0,15 ; et
14,5 à 16,5 % d'oeuf entier.

12. Pâte selon la revendication 11, comprenant en outre du cacao.

13. Pâte selon la revendication 11 ou 12, dans laquelle le saccharose en poudre, le sirop de maïs et le fructose cristallin sont présents en un rapport de 3/1/0,1.

14. Pâte selon l'une quelconque des revendications 11 à 13, comprenant en outre un ingrédient retenant l'humidité comprenant un ou plusieurs humectant(s), hydrocolloïde(s), gel(s) et/ou gomme(s).
